# EUROPÄISCHE PATENTSCHRIFT

(11) **EP 2 929 331 B1**
(45) Veröffentlichungstag und Bekanntmachung des Hinweises auf die Patenterteilung: **13.03.2019**
(21) Anmeldenummer: 13802027.6
(22) Anmeldetag: 04.12.2013
(51) Int. Cl.: G01N 25/72, B07C 5/34, G01J 5/02, G01J 5/10, G01J 5/00, G01N 21/90

(54) **INSPEKTIONSVERFAHREN UND INSPEKTIONSVORRICHTUNG FÜR BEHÄLTNISSE**
INSPECTION METHOD AND INSPECTION APPARATUS FOR CONTAINERS
PROCÉDÉ ET DISPOSITIF D'INSPECTION DE CONTENANTS

(30) Priorität: 04.12.2012 DE 102012111770
(43) Veröffentlichungstag der Anmeldung: 14.10.2015
(73) Patentinhaber: Krones AG, 93073 Neutraubling (DE)
(72) Erfinder: LINDNER, Peter, 93073 Neutraubling (DE)
(74) Vertreter: Bittner, Bernhard
(86) Internationale Anmeldenummer: PCT/EP2013/075583
(87) Internationale Veröffentlichungsnummer: WO 2014/086887

(56) Entgegenhaltungen:
- EP-A1- 2 442 080
- WO-A1-00/66283
- JP-A- 57 024 811
- US-A- 4 872 762

## Beschreibung

Die vorliegende Erfindung bezieht sich auf ein Inspektionsverfahren und eine Inspektionsvorrichtung für Behältnisse. Aus dem Stand der Technik sind insbesondere in der Getränke herstellenden Industrie eine Vielzahl von Inspektionsverfahren für Behältnisse bekannt. So ist es beispielsweise bekannt, bei der Herstellung von Kunststoffbehältnissen diese auf etwaige Fehler bei der Herstellung zu inspizieren. Auch sind aus dem Stand der Technik Kontrollverfahren und - vorrichtungen zur Mündungskontrolle von Behältnissen bekannt, die beispielsweise überprüfen, ob die Mündungen einwandfrei sind oder beispielsweise Glasbrüche auftreten. Ein weiteres kritisches Kriterium ist das Vorhandensein von Fremdkörpern in Behältnissen, beispielsweise von Glasscherben in Glasbehältnissen. Die Inspektion derartiger Fremdkörper ist oftmals sehr schwierig, da besagte Fremdkörper oftmals aus dem gleichen Material bestehen wie das Behältnis selbst und dadurch optisch nur schwer erkennbar sind. Auch sind derartige Fremdkörper sehr klein und damit nur schwer zu erfassen. Andererseits kann jedoch das Vorhandensein derartiger Fremdkörper in den Behältnissen gravierende Folgen haben, beispielsweise wenn der Konsument auf diese Weise unbemerkt diese Fremdkörper zu sich nimmt.

Im Stand der Technik sind daher auch Vorrichtungen und Verfahren zur Inspektion der Behältnisse im Hinblick auf derartige Fremdkörper bekannt. So beschreibt beispielsweise die DE 600 37 882 T2 eine Vorrichtung und ein Verfahren zur Untersuchung der Strukturintegrität von flüssigen Gegenständen. Diese Vorrichtung weist eine Sensoreinrichtung und eine elektromagnetische Strahlenquelle auf, wobei die Sensoreinrichtung funktionsfähig ist, um auf elektromagnetische Strahlung einer oder mehrerer Wellenlängen oder Bereiche von Wellenlängen zu reagieren. Bei diesem Verfahren wird das durchsichtige Behältnis von unten beleuchtet und die durch tretende Strahlung gleichzeitig mit der Sensoreinrichtung erfasst. Das Dokument EP-A-2 442 080 offenbart ein Inspektionsverfahren und eine Inspektionsvorrichtung für Behältnisse.

Der vorliegenden Erfindung liegt die Aufgabe zugrunde, eine Fremdkörpererkennung in Behältnissen, insbesondere auch bei Auftreten kleiner Fremdkörper zu ermöglichen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche. Bei einem erfindungsgemäßen Verfahren zum Inspizieren von Behältnissen, insbesondere von wenigstens teilweise transparenten Behältnissen, wird das Behältnis mittels einer Transporteinrichtung entlang eines vorgegebenen Transportpfades transportiert und es wird eine Außenwandung des Behältnisses wenigstens bereichsweise temperiert und weiterhin ein Bereich der Innenwandung des Behältnisses durch eine Mündung des Behältnisses hindurch während oder nach der Temperierung der Außenwandung mittels einer Inspektionseinrichtung inspiziert.

Erfindungsgemäß erfasst die Inspektionseinrichtung wenigstens von dem beobachteten Bereich der Innenwandung ausgehende Wärmestrahlung und es wird aufgrund der erfassten Wärmestrahlung auf das Vorhandensein von Fremdkörpern geschlossen, welches sich zwischen dem beobachteten Bereich der Innenwandung und der Inspektionseinrichtung befinden. Insbesondere befinden sich diese Fremdkörper in einem optischen Pfad zwischen dem beobachteten Bereich und der Inspektionseinrichtung und insbesondere liegen diese Fremdkörper auf einem Bodenbereich im Inneren des Behältnisses.

Es wird daher insbesondere vorgeschlagen, das Behältnis mittels einer Wärmebildkamera bzw. einer Wärmebilder aufnehmenden Inspektionseinrichtung zu inspizieren. Vorzugsweise handelt es sich bei dem Behältnis um ein Getränkebehältnis und insbesondere um eine Flasche oder ein (Trink-)glas bzw. einen Trinkbecher.

Insbesondere handelt es sich dabei um Fremdkörper, die im Inneren des Behältnisses beispielsweise auch am Boden liegen. Bevorzugt wird daher eine Bodeninspektion verwendet, bei der zunächst ein bestimmter Bereich des Behältnisses, wie etwa ein Behältnisboden, temperiert und insbesondere erwärmt wird und anschließend der Behältnisboden durch die Mündung des Behältnisses hindurch mittels einer Wärmebildkamera inspiziert wird. Durch die unterschiedliche Wärmeemission können andere Feststoffe als das Material des Behältnisses in dem Kamerabild abgebildet werden. Betrachtet man den besonders kritischen Bereich zwischen der Inspektionseinrichtung und der Fülleinrichtung, so könnten beispielsweise Glassplitter, die durch Flaschenbruch entstehen und damit eine andere Temperatur als der Behältnisboden haben, noch direkt in dem Fülleeinlauf einfach und platzsparend detektierbar sei, weil insbesondere keine Beleuchtungseinrichtung von unten notwendig ist. Auf diese Weise wird eine Inspektionseinrichtung vorgeschlagen, bei der die Behältnisse nicht notwendig bodenfrei transportiert werden müssen.

Bei Vorrichtungen aus dem Stand der Technik ist üblicherweise eine Unterbrechnung eines bodengeführten Transports notwendig, um die Behältnisse von unten zu beleuchten. Durch den Verzicht auf derartige Unterbrechungen ergibt sich ein Einsparungspotenzial und es können auch Fehlerquellen reduziert werden.

Bei einem bevorzugten Verfahren findet eine Inspektion eines unbefüllten Behältnisses statt. Vorteilhaft handelt es sich bei dem Behältnis um ein Glasbehältnis und insbesondere eine Glasflasche. Es wäre jedoch - ggf. modifiziert - auch eine Anwendung auf Kunststoffbehältnisse denkbar. Vorteilhaft handelt es sich um geöffnete bzw. (noch) offene Behältnisse.

Insbesondere handelt es sich bei den Fremdkörpern um Glasscherben, die im Rahmen des Herstellungsprozesses ungewollt in das Innere des Behältnisses und insbesondere auf dessen Boden gelangen können. Es könnte sich aber auch um andere Fremdkörper wie beispielsweise Insekten handeln. Vorteilhaft liegen der temperierte Bereich und der inspizierte Bereich einander gegenüber. So kann beispielsweise die Außenwandung des Behältnisses insbesondere in einem Bodenbereich erwärmt werden und anschließend die Innenwandung dieses Bodenbereichs inspiziert werden. Bevorzugt dient daher die Erfindung zur Inspektion des Bodens derartiger Behältnisse.

Durch die vorgeschlagene Vorgehensweise ist es möglich, insbesondere kurz vor dem Füllen in das Behältnis gefallene Fremdkörper die Glasscherben aber auch Fliegen zu erkennen. Zu diesem Zwecke wird bevorzugt der Behältnisboden zunächst temperiert und insbesondere erwärmt und anschließend wird der Boden des Behältnisses durch die Behältnismündung hindurch betrachtet, um auf diese Weise Fremdkörper aufgrund unterschiedlicher Temperatur zu erkennen.

Es wäre jedoch auch möglich, den Behältnisboden zu kühlen und auf diese Weise wärmere aus der Umgebung hinein gefallene Fremdkörper aufgrund der Temperaturdifferenz zu ermitteln.

Daneben wäre es auch möglich, unterschiedliche Emissionswerte von Stoffen unterschiedlicher Dichte zu erkennen. So wäre es beispielsweise möglich, eine flüssigen Stickstofftropfen in das Behältnis zu bringen, anschließend kurz zu warten und anschließend eine Kameraaufnahme durch die Behältnismündung hindurch durchzuführen, um so festzustellen, welche Bereiche sich stark abgekühlt haben.

Bevorzugt werden daher die genannten Fremdkörper über eine Temperaturdifferenz zwischen dem Fremdkörper und dem Behältnisboden erfasst.

Vorteilhaft erfolgt eine Erfassung von Wärmestrahlung, nachdem die Temperierung bzw. Erwärmung des Behältnisses abgeschlossen ist. Auf diese Weise kann verhindert werden, dass die Messungen der Inspektionseinrichtung durch eine Erwärmungseinrichtung selbst verfälscht werden. Bei einem weiteren vorteilhaften Verfahren erfolgt eine Erwärmung des Behältnisses während des Transports der Behältnisse. So wäre es beispielsweise möglich, dass die Behältnisse an einer Erwärmungseinrichtung vorbei geführt werden, die deren Boden erwärmt. Auch könnte eine Transporteinrichtung selbst als Erwärmungselement ausgestaltet sein oder Erwärmungselemente aufweisen. So könnte beispielsweise ein Transportband, auf dem die Behältnisse transportiert werden, selbst diese Erwärmungselemente aufweisen, beispielsweise in Form von beheizbaren Transportkettengliedern.

Bei einem weiteren vorteilhaften Verfahren erfolgt die Inspektion des Behältnisses während eines Transports der Behältnisse. Dabei kann es sich im einen kontinuierlichen Transport handeln. Es wäre jedoch auch ein getakteter Transport möglich, wobei die Inspektionseinrichtung eine Bildaufnahme jeweils in der Stillstandsphase durchführt. Vorteilhaft weist die Inspektionseinrichtung eine Bildaufnahmeeinrichtung auf, welche ortsaufgelöste Bilder aufnimmt.

Bei einem weiteren vorteilhaften Verfahren werden die Behältnisse wenigstens abschnittsweise während ihres Transports in einem Bodenbereich gestützt. Vorteilhaft werden die Behältnisse auf einem Transportband, einer Transportkette oder einer Transportscheibe transportiert und bevorzugt während dieses Transports auch erwärmt.

Bei einem weiteren vorteilhaften Verfahren erfolgt eine Erwärmung des Wandungsbereich des Behältnisses und insbesondere eines Bodenbereichs durch einen Kontakt mit einem Kontaktkörper. Dieser Kontaktkörper kann dabei beispielsweise ein erwärmtes Transportband sein.

Insbesondere erfolgt die Temperierung bzw. Erwärmung durch Kontakt mit der Transporteinrichtung. Es wäre jedoch auch eine berührungslose Erwärmung möglich, etwa durch Beaufschlagung mit einem gasförmigen Medium wie etwa erwärmter Luft.

Die vorliegende Erfindung ist weiterhin auf eine Vorrichtung zum Inspizieren von Behältnissen gerichtet, welche eine Transporteinrichtung aufweist, welche die Behältnisse entlang eines vorgegebenen Transportspfades transportiert. Weiterhin weist die Vorrichtung eine Temperiereinrichtung auf, welche wenigstens einen Wandungsbereich der Behältnisse temperiert und eine in einer Transportrichtung der Behältnisse stromabwärts bezüglich der Temperierungseinrichtung angeordnete Inspektionseinrichtung, welche wenigstens einen Abschnitt der Behältnisse inspiziert.

Erfindungsgemäß weist die Inspektionseinrichtung eine Wärmebilder aufnehmende Bildaufnahmeeinrichtung auf.

Es wird daher auch vorrichtungsseitig vorgeschlagen, dass mittels einer Erwärmungseinrichtung zunächst die Behältnisabschnitte, insbesondere die Bodenabschnitte, erwärmt werden und anschließend mittels einer Wärmebildkamera der so erwärmte (Boden)bereich betrachtet wird, um so auf Fremdkörper zu schließen. Vorteilhaft ist die Temperierungseinrichtung in einem Bereich der Transporteinrichtung angeordnet.

Vorteilhaft weist die Inspektionseinrichtung eine Bildauswerteeinheit auf, welche insbesondere Bereiche des Bildes erfasst, in denen eine abweichende Temperatur auftritt. Vorteilhaft kann diese Auswerteeinrichtung dabei derart ausgestaltet sein, dass sie unterscheiden kann zwischen gewöhnlichen Wärmeschwankungen und auch zwischen höheren Wärmebildschwankungen, welche auf das Vorhandensein von Fremdkörpern hindeuten.

So wäre es möglich, dass ein Benutzer das aufgenommene Bild selbst auswertet, es wäre jedoch auch möglich, dass diese Auswertung elektronisch erfolgt und beispielsweise ab einer bestimmten Temperaturdifferenz zwischen dem aufgenommenen Bodenbereich und einzelnen Abschnitten desselben unterscheidet. Bei einer weiteren vorteilhaften Ausführungsform weist die Vorrichtung eine Auswurf- bzw. Ausschlusseinrichtung auf, welche solche Behältnisse auswirft bzw. ausschleust, bei denen Fremdkörper festgestellt wurden.

Vorteilhaft ist die Inspektionseinrichtung in einer Transportrichtung der Behältnisse vor einer Fülleinrichtung zum Befüllen dieser Behältnisse angeordnet. Bevorzugt ist die Inspektionseinrichtung unmittelbar vor einer Fülleinrichtung angeordnet. So kann die Fülleinrichtung beispielsweise einen Einlaufstern aufweisen, welcher der Fülleinrichtung die Behältnisse zuführt und in einem Bereich dieses Einlaufsterns ist bevorzugt die Inspektionseinrichtung angeordnet. Verfahrensseitig werden die Behältnisse und insbesondere deren Böden bevorzugt unmittelbar vor einer Befüllung (insbesondere mit einem Getränk) inspiziert.

Vorteilhaft weist die Vorrichtung eine Anzeigeeinrichtung, insbesondere eine Bildausgabeeinrichtung bzw. Anzeigeeinrichtung auf, welche von der Inspektionseinrichtung ausgegebene Bilder aufnimmt.

Bei einer weiteren vorteilhaften Ausführungsform weist die Vorrichtung eine Fülleinrichtung auf, welche der Inspektionseinrichtung nachgeschaltet ist.

Vorteilhaft handelt es sich bei der Inspektionseinrichtung um eine Infrarotkamera, welche insbesondere Strahlung im infraroten Wellenlängenbereich aufnimmt.

Bei einer weiteren vorteilhaften Ausführungsform ist die Temperierungseinrichtung beweglich ausgestattet und insbesondere mit den Behältnissen mitbewegend ausgestattet. So kann die Temperierungseinrichtung, wie oben erwähnt, beispielsweise in Form von erwähnten Transportkettengliedern ausgebildet sein. Es wäre jedoch auch möglich, dass die Temperierungseinrichtung stationär ausgebildet ist und die Behältnisse dieser gegenüber bewegt werden. Bei einer weiteren vorteilhaften Ausführungsform nimmt die Transporteinrichtung einen Boden gestützten Transport der Behältnisse vor. So könnte die Transporteinrichtung etwa als Transportband oder als Transportkette ausgeführt sein. Dabei könnte dieses Transportband oder auch Kettenglieder der Transportkette selbst erwärmbar sein und/oder selbst Öffnungen aufweisen, durch welche hindurch der Behältnisboden mit einem erwärmten Medium bzw. erwärmter Luft beaufschlagt wird. Diese erwärmte Luft könnte dabei aus einem anderen Anlagenbereich zugeführt werden, in der diese Luft als Abluft entsteht.

Bei einer weiteren vorteilhaften Ausführungsform weist die Transporteinrichtung selbst die Temperierungseinrichtung auf. Bevorzugt handelt es sich bei der Transporteinrichtung um ein Transportband, auf dem die Behältnisse (insbesondere stehend) gefördert werden.

Bei einer weiteren vorteilhaften Ausführungsform ist die Inspektionseinrichtung stationär angeordnet. Vorteilhaft ist eine weitere Transporteinrichtung vorgesehen, welche die Behältnisse an dieser stationären Inspektionseinrichtung vorbei führt. Bei dieser weiteren Transporteinrichtung kann es sich beispielsweise um einen Transportstern handeln, an dem die Behältnisse beispielsweise an ihrem Außenumfang oder auch an ihrem Mündungsbereich geführt werden. Vorteilhaft ist eine Bewegung dieser weiteren Transporteinrichtung mit der Inspektionseinrichtung synchronisiert, wodurch beispielsweise diese Synchronisationseinrichtung bewirkt, dass jeweils Bilder aufgenommen werden, wenn sich die Inspektionseinrichtung oberhalb der Behältnisse befindet und so durch deren Mündung hindurch die Behältnisse inspizieren kann.

Es könnten jedoch auch sich aneinander anschließende Transbänder vorgesehen sein, wobei an dem ersten Transportband die Erwärmungseinrichtung und an dem zweiten Transportband die Inspektionseinrichtung vorgesehen ist.

Weitere Vorteile und Ausführungsformen ergeben sich aus den beigefügten Zeichnungen:
Darin zeigen:
- Fig. 1: eine Darstellung zur Veranschaulichung eines Ablaufs eines erfindungsgemäßen Verfahrens;
- Fig. 2: eine grob schematische Darstellung einer erfindungsgemäßen Vorrichtung; und;
- Fig. 3: eine weitere Darstellung einer erfindungsgemäßen Vorrichtung.

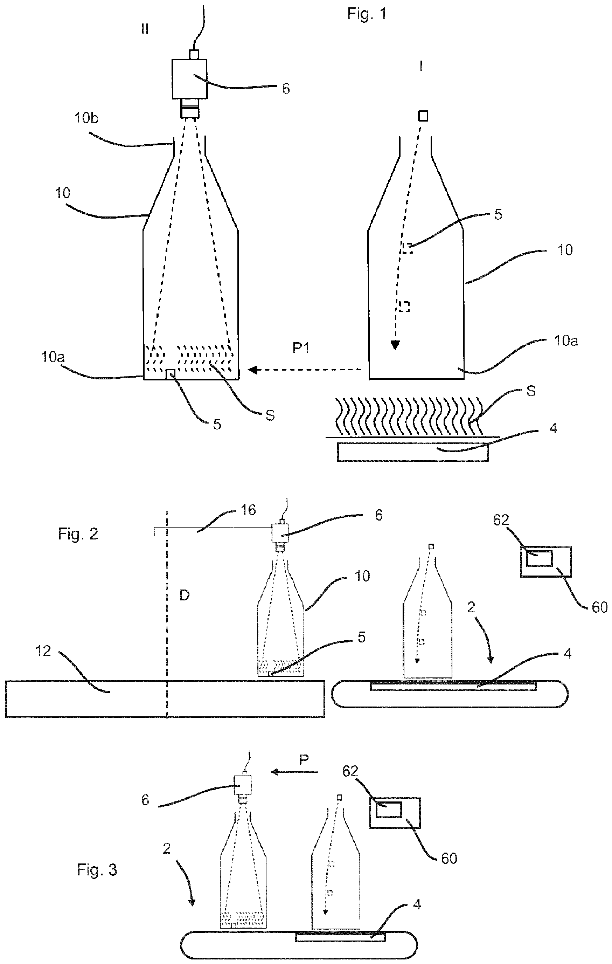

Fig. 1 zeigt eine grob schematische Darstellung zur Veranschaulichung eines erfindungsgemäßen Verfahrens. Dabei ist ein Behältnis 10 dargestellt, welches hier von rechts nach links gefördert wird (Pfeil 1). In der rechten Darstellung (I) wird dieses Behältnis 10 durch eine Erwärmungseinrichtung 4, die hier unterhalb des Behältnisses angeordnet ist, insbesondere in einem Bodenbereich 10a erwärmt. Weiterhin ist schematisch ein Fremdkörper 5 dargestellt, der gerade in das Behältnis hinein fällt.

Das Behältnis wird nun, wie durch den Fall P1 veranschaulicht, zur Inspektion (II) weiter transportiert. In diesem Bereich strahlt insbesondere der Bodenbereich 10a Wärmestrahlung S ab. In dem Bereich, in dem der Fremdkörper 5 liegt, wird keine Wärmestrahlung abgestrahlt bzw. diese geblockt.

Oberhalb des Behältnisses 10 bzw. auch oberhalb dessen Mündung 10b befindet sich eine Inspektionseinrichtung 6, wie insbesondere eine Wärmebildkamera, welche durch die Mündung 10b den Bodenbereich 10a des Behältnisses 10 betrachtet. Zu diesem Zwecke ist diese Inspektionseinrichtung 6 derart fokussiert, dass der Bodenbereich 10a aufgenommen wird. Vorteilhaft ist dabei die Inspektionseinrichtung bzw. der dem Behältnis nächste Abschnitt der Inspektionseinrichtung 6 in einem Abstand von dem Mündungsrand des Behältnisses 10 angeordnet, der zwischen 1cm und 20cm, bevorzugt zwischen 1cm und 15cm, bevorzugt zwischen 1cm und 10cm und besonders bevorzugt zwischen 1cm und 5cm liegt.

Diese Inspektionseinrichtung 6 erfasst nun die ausgehende Wärmestrahlung S, wobei jedoch in dem Bereich, in dem der Fremdkörper 5 liegt, weniger oder keine Wärmestrahlung abgegeben wird, da dieser Fremdkörper 5 nicht in der gleichen Weise erwärmt bzw. temperiert wurde wie der Bodenbereich 10a. In einem von der Inspektionseinrichtung 6 aufgenommenen Bild kann sich dieser Bereich beispielsweise als dunkler Fleck bemerkbar machen.

Fig. 2 zeigt eine grob schematische Darstellung einer möglichen Ausführungsform der Erfindung. Dabei ist hier wieder die Transporteinrichtung 2 dargestellt, bei der es sich beispielsweise um ein umlaufendes Transportband handelt, auf dem das Behältnis 10 transportiert wird. Gleichzeitig in diese Transporteinrichtung auch die Erwärmungseinrichtung 4 integriert sein, welche hier den Bodenbereich 10a des Behältnisses 10 durch einen Kontakt mit diesem Bodenbereich 10a erwärmt.

Anschließend gelangt das Behältnis 10 auf eine zweite Transporteinrichtung 12, die hier beispielsweise als drehbare Scheibe ausgeführt sein kann. Das Bezugszeichen D bezeichnet eine Drehachse dieser zweiten Transporteinrichtung Daneben kann diese zweite Transporteinrichtung 12 auch Führungselemente aufweisen, welche die Behältnisse beispielsweise an ihrem Außenumfang kontaktieren und somit führen (nicht dargestellt). Stationär ist eine Inspektionseinrichtung 6 an einem Träger 16 angeordnet und dabei so positioniert, dass sie zeitweise durch die Mündung des Behältnisses 10 hindurch in dessen Innenbereich Bilder aufnehmen kann.

Durch eine von einer Auswerteeinrichtung 60 vorgenommene Auswertung der von der Inspektionseinrichtung 6 aufgenommenen Bilder ist eine Feststellung möglich, ob sich in dem Behältnis Fremdkörper befinden. Zu diesem Zweck ist es möglich, dass ein aufgenommenes Bild mittels der Auswerteeinrichtung und ggf. eine Anzeigeeinrichtung 62 ausgegeben wird.

Bevorzugt erfolgt die Bildaufnahme bzw. Inspektion der Behältnisse unmittelbar, nach deren Erwärmung abgeschlossen ist. Bevorzugt ist ein Zeitraum, der zwischen dem Ende der Erwärmungsphase und der Inspektion liegt, kleiner als 10sec, bevorzugt kleiner als 5sec, bevorzugt kleiner als 4sec.

Bevorzugt ist die Inspektionseinheit unmittelbar vor einer Füllmaschine angeordnet, besonders bevorzugt direkt vor dem Behandlungsorgan, also Füllventil. Die Distanz zum Füllventil ist dabei kleiner 24 Behälterteilungen, bevorzugt kleiner 12, bevorzugt kleiner 6 Teilungen.

Auch ist es möglich, dass diese Auswerteeinrichtung aufgenommene Bilder mit Referenzbildern vergleicht um so festzustellen, ob sich in dem Behältnis Fremdkörper befinden. Geht man beispielsweise bei der Erfindung bei von einer Anwendung auf Glasbehältnisse aus, so kann hierbei ein vereinfachtes Transmissionsspektrum von Glas zu Grunde gelegt werden. Dieses weist eine signifikante Abnahme der Transmission in einem Bereich von 2,8µm - 4,5 µm auf. In der Leerbehältnisinspektion weist damit eine Inspektionseinrichtung bzw. IR-Kamera, die beispielsweise an einem Bereich von 3,5µm arbeitet, gute Inspektionsergebnisse bei einer Glasscherbenerkennung auf. Auf diese Weise können auch die in einer Erkennung unzureichenden Dunkelfeldinspektionen durch das erfindungsgemäße Verfahren ersetzt werden. Bevorzugt weist damit die Inspektionseinrichtung einen erkennbaren Wellenlängenbereich auf, der größer ist als 1000nm, bevorzugt größer als 2000nm.

Die Inspektionseinheit arbeitet bevorzugt in einem IR- Wellenlängenbereich, bei dem Glas nahezu (IR-) Lichtundurchlässig ist so, dass der erwärmte Behälterboden als Leuchtfläche dient und keine Störungen durch den Hintergrund hervorgerufen werden. Damit soll die Einheit in einem Wellenlängenbereich >2,8µ, bevorzugt >4µ und besonders bevorzugt >5µm betrieben werden. Um Fremdstrahlung zu minimieren, kann bevorzugt ein Bandpassfilter eingesetzt werden. Dabei kann dieser Bandpassfilter bevorzugt Wellenlängen passieren lassen, die unter 1000 µm, bevorzugt unter 100 µm und besonders bevorzugt unter 50 µm liegen. Vorteilhaft wird als Detektormaterial für die Inspektionseinrichtung ein Halbleitermaterial verwendet und insbesondere ein Material, welches aus einer Gruppe von Materialien ausgewählt ist, welche InGaAs, InSb, InAsSb, PbS, PbSe, Poly-SiGe, Bi/Sb, Kombinationen hieraus und dergleichen enthält. Auch können Photonendetektoren sowie auch Bolometer oder Thermopiles Anwendung finden.

Weiterhin ist denkbar, dass zur Minimierung von IR Fremdstrahlung und zur Kontrasterhöhung des Bodenbereiches die Behälterseitenwand gekühlt wird.

Bevorzugt weist eine Auswerteeinheit zur Auswertung von aufgenommenen Bilder, beispielsweise ein entsprechender Chip eine Integrationszeit auf, die geringer ist als 2ms, bevorzugt geringer als 1ms und besonders bevorzugt geringer als 500 µs. Die Transportgeschwindigkeiten einer entsprechenden Vorrichtung zum Behandeln von Behältnissen sind bevorzugt höher als 10.000 Behältnisse/h, bevorzugt höher als 20.000 Behältnisse/h und besonders bevorzugt höher als 40.000 Behältnisse/h.

Fig. 3 zeigt eine weitere Ausführungsform der vorliegenden Erfindung. Bei dieser Ausführungsform findet sowohl die Erwärmung des Bodenbereichs als auch die Inspektion mit der Inspektionseinrichtung 6 während des Transports mit dergleichen Transporteinrichtung statt. Zu diesem Zweck ist in einem Anfangsbereich (betrachtet in der Transportrichtung P der Behältnisse) der Transporteinrichtung 2 die Erwärmungseinrichtung 4 angeordnet. Bevorzugt ist hier die Erwärmungseinrichtung 4 stationär angeordnet. Die Inspektionseinrichtung schließt sich in einem zweiten Abschnitt der Transporteinrichtung 2 an. Hier kann eine Inspektion der Behältnisse unmittelbar im Anschluss an deren Erwärmung bzw. Temperierung erfolgen.

Die Anmelderin behält sich vor, sämtliche der in den Anmelderunterlagen offenbarten Merkmale einzeln oder in Kombination als erfindungswesentlich zu beanspruchen, falls diese einzeln oder in Kombination neu gegenüber dem Stand der Technik sind.

### Bezugszeichenliste

- 1: Vorrichtung
- 2: Transporteinrichtung
- 4: Temperierungseinrichtung
- 5: Fremdkörper
- 6: Inspektionseinrichtung
- 10: Behältnis
- 10a: Bodenbereich des Behältnisses 10
- 10b: Mündung des Behältnisses 10
- 12: weitere Transporteinrichtung
- 16: Träger
- 60: Auswerteeinrichtung
- 62: Anzeigeeinrichtung

- P1: Transportrichtung
- S: Wärmestrahlung
- D: Drehachse

## Patentansprüche

1. Verfahren zum Inspizieren von Getränkebehältnissen aus Glas (10), wobei das Behältnis (10) mittels einer Transporteinrichtung (2) entlang eines vorgegebenen Transportpfads transportiert wird und eine Aussenwandung (10a) des Behältnisses (10) wenigstens bereichsweise temperiert wird und wobei ein Bereich der Innenwandung (10b) des Behältnisses (10) durch eine Mündung (10c) des Behältnisses hindurch während oder nach der Temperierung der Aussenwandung mittels einer Inspektionseinrichtung (6) inspiziert wird, wobei die Inspektionseinrichtung (6) wenigstens von dem beobachteten Bereich der Innenwandung ausgehende Wärmestrahlung erfasst und aufgrund der erfassten Wärmestrahlung auf das Vorhandensein von Fremdkörpern geschlossen wird, welche sich zwischen dem beobachteten Bereich der Innenwandung (10b) und der Inspektionseinrichtung (6) befinden, **dadurch gekennzeichnet, dass** die Inspektionseinrichtung in einem Wellenlängenbereich mit Wellenlängen größer als 5 µm betrieben wird.

2. Verfahren nach Anspruch 1,
**dadurch gekennzeichnet, dass**
die Erfassung der Wärmestrahlung erfolgt, nachdem die Erwärmung des Behältnisses (10) abgeschlossen ist.

3. Verfahren nach wenigstens einem der vorangegangenen Ansprüche,
**dadurch gekennzeichnet, dass**
die Erwärmung des Behältnisses (10) während eines Transports des Behältnisses (10) erfolgt.

4. Verfahren nach wenigstens einem der vorangegangenen Ansprüche,
**dadurch gekennzeichnet, dass**
die Inspektion des Behältnisses (10) durch die Inspektionseinrichtung (6) während eines Transport des Behältnisses (10) erfolgt.

5. Verfahren nach wenigstens einem der vorangegangenen Ansprüche,
**dadurch gekennzeichnet, dass**
die Behältnisse (10) wenigstens abschnittsweise während ihres Transports in einem Bodenbereich gestützt werden.

6. Verfahren nach wenigstens einem der vorangegangenen Ansprüche,
**dadurch gekennzeichnet, dass**
eine Erwärmung des Wandungsbereichs durch Kontakt mit einem Kontaktkörper erfolgt.

7. Vorrichtung (1) zum Inspizieren von Behältnissen aus Glas (10) mit einer Transporteinrichtung (2) welche die Behältnisse (10) entlang eines vorgegebenen Transportpfads transportiert, mit einer Temperierungseinrichtung (4) welche wenigstens einen Wandungsbereich der Behältnis temperiert und mit einer in der Transportrichtung der Behältnisse (10) stromabwärts bezüglich der Temperierungseinrichtung (4) angeordneten Inspektionseinrichtung (6), welche wenigstens einen Abschnitt der Behältnisse inspiziert, wobei die Inspektionseinrichtung (6) eine Wärmebilder aufnehmende Bildaufnahmeeinrichtung (6) aufweist, wobei die Inspektionseinrichtung eine Auswerteeinrichtung (60) enthält, mit der auf das Vorhandensein von Fremdkörper geschlossen wird, welche sich zwischen dem beobachteten Bereich einer Innenwandung (10b) und der Inspektionsvorrichtung befinden, **dadurch gekennzeichnet, dass** die Inspektionseinrichtung in einem Wellenlängenbereich mit Wellenlängen größer als 5 µm betrieben wird.

8. Vorrichtung (1) nach Anspruch 7,
**dadurch gekennzeichnet, dass**
die Temperierungseinrichtung (4) mit den Behältnissen (10) beweglich ausgestaltet ist.

9. Vorrichtung (1) nach Anspruch 7,
**dadurch gekennzeichnet, dass**
die Transporteinrichtung (2) die Temperierungseinrichtung (4) aufweist.

10. Vorrichtung (1) nach Anspruch 7,
**dadurch gekennzeichnet, dass**
die Inspektionseinrichtung (6) stationär angeordnet ist.

11. Vorrichtung (1) nach Anspruch 7,
**dadurch gekennzeichnet, dass**
die Inspektionseinrichtung (6) in einer Transportrichtung der Behältnisse (10) unmittelbar vor einer Fülleinrichtung zum Befüllen der Behältnisse (10) angeordnet ist.

## Claims

1. A method for inspecting drinks containers (10) of glass, wherein the container (10) is transported along a predefined transport path by means of a transport facility (2), and an outside wall (10a) of the container (10) is tempered at least in sections, and wherein an area of the inside wall (10b) of the container (10) is inspected through an orifice (10c) of the container during or after tempering of the outside wall by means of an inspection means (6),
wherein the inspection means (6) detects heat radiation emanating from the observed area of the inside wall and conclusions are drawn from the detected heat radiation as to the presence of foreign bodies between the observed area of the inside wall (10b) and the inspection means (6),
**characterized in that**
the inspection means is operated in a wavelength range with wavelengths exceeding 5 µm.

2. The method according to claim 1,
**characterized in that**
the heat radiation is detected after the heating of the container (10) has been completed.

3. The method according to at least one of the preceding claims,
**characterized in that**
the heating of the container (10) is carried out during transportation of the container (10).

4. The method according to at least one of the preceding claims,
**characterized in that**
the inspection of the container (10) by the inspection means (6) is carried out during transportation of the container (10).

5. The method according to at least one of the preceding claims,
**characterized in that**
the containers (10), at least in sections, are supported in a floor area during transportation.

6. The method according to at least one of the preceding claims,
**characterized in that**
the heating of the wall area is effected through contact with a contact body.

7. A device (1) for inspecting containers (10) of glass with a transport facility (2) which transports the containers (10) along a predefined transport path, with a tempering means (4) which tempers at least one wall area of the container, and an inspection means (6) arranged in transport direction of the container (10) downstream relative of the tempering means (4), which inspects at least one section of the containers,
wherein the inspection means (6) comprises an image recording means (6) recording thermal images, wherein the inspection means includes an evaluation means (60) for indicating the presence of foreign bodies located between the observed area of an inner wall (10b) and the inspection device,
**characterized in that**
the inspection means is operated in a wavelength range with wavelengths exceeding 5 µm.

8. The device (1) according to claim 7,
**characterized in that**
the tempering means (4) with the containers (10) is configured so as to be moveable.

9. The device (1) according to claim 7,
**characterized in that**
the transport facility (2) comprises the tempering means (4).

10. The device (1) according to claim 7,
**characterized in that**
the inspection device (6) is arranged so as to be stationary.

11. The device (1) according to claim 7,
**characterized in that**
the inspection means (6) is arranged in a transport direction of the containers (10) directly in front of a filling means for filling the containers (10).

## Revendications

1. Procédé d'inspection de contenants pour boissons en verre (10), dans lequel le contenant (10) est transporté le long d'un chemin de transport prédéfini au moyen d'un dispositif de transport (2) et une paroi extérieure (10a) du contenant (10) est mise à température au moins par zone et dans lequel une zone de la paroi intérieure (10b) du contenant (10) est inspectée à travers une embouchure (10c) du contenant pendant ou après la mise à température de la paroi extérieure au moyen d'un dispositif d'inspection (6),
dans lequel le dispositif d'inspection (6) détecte le rayonnement de chaleur émis au moins par la zone observée de la paroi intérieure et sur la base du rayonnement de chaleur détecté, il est conclu à la présence de corps étrangers, lesquels se trouvent entre la zone observée de la paroi intérieure (10b) et le dispositif d'inspection (6),
**caractérisé en ce que**
le dispositif d'inspection est exploité dans une gamme de longueur d'onde avec des longueurs d'onde supérieures à 5 µm.

2. Procédé selon la revendication 1,
**caractérisé en ce que**
la détection du rayonnement de chaleur a lieu après que le chauffage du contenant (10) est terminé.

3. Procédé selon au moins l'une quelconque des revendications précédentes,
**caractérisé en ce que**
le chauffage du contenant (10) a lieu pendant un transport du contenant (10).

4. Procédé selon au moins l'une quelconque des revendications précédentes,
**caractérisé en ce que**
l'inspection du contenant (10) a lieu par le dispositif d'inspection (6) pendant un transport du contenant (10).

5. Procédé selon au moins l'une quelconque des revendications précédentes,
**caractérisé en ce que**
les contenants (10) sont supportés au moins par section pendant leur transport dans une zone de fond.

6. Procédé selon au moins l'une quelconque des revendications précédentes,
**caractérisé en ce que**
un chauffage de la zone de paroi a lieu par contact avec un corps de contact.

7. Dispositif (1) d'inspection de contenants en verre (10) avec un dispositif de transport (2) lequel transporte les contenants (10) le long d'un chemin de transport prédéfini, avec un dispositif de mise à température (4) lequel met à température au moins une zone de paroi du contenant et avec un dispositif d'inspection (6) agencé dans la direction de transport des contenants (10) en aval par rapport au dispositif de mise à température (4), lequel inspecte au moins une section des contenants, dans lequel le dispositif d'inspection (6) présente un dispositif de capture d'image (6) capturant des images thermiques, dans lequel le dispositif d'inspection contient un dispositif d'évaluation (60), avec lequel il est conclu à la présence de corps étrangers, lesquels se trouvent entre la zone observée d'une paroi intérieure (10b) et le dispositif d'inspection, **caractérisé en ce que**
le dispositif d'inspection est exploité dans une gamme de longueur d'onde avec des longueurs d'onde supérieures à 5 µm.

8. Dispositif (1) selon la revendication 7,
**caractérisé en ce que**
le dispositif de mise à température (4) est configuré mobile avec les contenants (10).

9. Dispositif (1) selon la revendication 7,
**caractérisé en ce que**
le dispositif de transport (2) présente le dispositif de mise à température (4).

10. Dispositif (1) selon la revendication 7,
**caractérisé en ce que**
le dispositif d'inspection (6) est agencé de manière stationnaire.

11. Dispositif (1) selon la revendication 7,
**caractérisé en ce que**
le dispositif d'inspection (6) est agencé dans une direction de transport des contenants (10) directement avant un dispositif de remplissage pour le remplissage des contenants (10).
